# EUROPEAN PATENT SPECIFICATION

(11) **EP 2 906 904 B1**
(45) Date of publication and mention of the grant of the patent: **11.07.2018**
(21) Application number: 13794943.4
(22) Date of filing: 09.10.2013
(51) Int. Cl.: G01B 7/06

(54) **MEASURING INSTRUMENT AND METHOD**
MESSINSTRUMENT UND -VERFAHREN
INSTRUMENT ET MÉTHODE DE MESURE

(30) Priority: 09.10.2012 GB 201218042
(43) Date of publication of application: 19.08.2015
(73) Proprietor: Elcometer Limited, Manchester, Lancashire M43 6BU (GB)
(72) Inventor: SELLARS, Michael Carrington, Manchester Lancashire M43 6BU (GB); CLARK, Gordon Peter, Manchester M43 6BU (GB)
(74) Representative: Wilson Gunn
(86) International application number: PCT/GB2013/052622
(87) International publication number: WO 2014/057259

(56) References cited:
- WO-A1-00/19165
- WO-A1-2012/101551
- CN-Y- 201 382 807
- US-A1- 2003 002 562
- US-A1- 2007 270 672
- US-A1- 2008 016 711

## Description

### Field of the invention

The present invention relates to a measuring instrument, and to methods of making measurements. The invention relates particularly, but not exclusively, to a coating thickness measuring instrument.

### Background to the invention

A conventional coating thickness measuring instrument employs a probe which relies on magnetic induction in a coated metal substrate to enable the distance between the probe and the substrate to be measured when the probe is brought into contact with a coated surface of the substrate, and thereby determine the thickness of the coating. The accuracy of the technique is highly dependent on the electrical conductivity and magnetic properties of the substrate. So, in order to obtain accurate measurements, the instrument must be calibrated for each type of substrate on which measurements are to be taken using a set of calibration foils of known thickness. A foil of known thickness is placed onto a bare sample of substrate, the probe placed over the foil and a thickness measurement is taken. The instrument can then be calibrated so that the measured thickness corresponds to the known thickness of the foil. Owing to the non-linear nature of the measurement technique it is usually necessary for a number of calibration readings to be made using a range of calibration foils of different thickness to properly calibrate the instrument to make readings on a given substrate. A thickness measuring instrument for measuring the thickness of a pipe wall is disclosed in JP 2010 096 720 A. To simplify the process for a user, the instrument is arranged to prompt a user to make calibration readings using calibration foils via a display screen. However, because the precise thickness of calibrations foils cannot be well controlled, to ensure accuracy, it is necessary for the user to manually enter the thickness of each calibration foil used. This is time consuming and introduces the possibility that foil thickness is entered incorrectly, which would lead to incorrect calibration of the instrument.

Some types of existing coating thickness measuring instrument employ a detachable probe, allowing different probes to be used with the instrument. The characteristics of individual probes vary, so to maintain accuracy of the measurement system the instrument should be provided with details of the characteristics of the probe with which it is used. In effect, therefore, the instrument also has to be calibrated to a particular probe, which raises similar issues as to calibration to a particular substrate.

Measuring instruments are often used to make repeated measurements of given articles and/or repeated measurements of particular parts of articles. For example, a coating thickness measuring instrument may be used to regularly check the thickness of a coating applied to a bridge. Repeated measurements of different articles and locations need to be recorded in relation to the article or location for later analysis. Creating an appropriate record whilst making measurements is time consuming and allows the potential for error.

Embodiments of the present invention have been made in consideration of these issues.

### Summary of the invention

According to an aspect of the present invention, which is defined in the independent apparatus claim 1, there is provided a measuring instrument comprising a reader arranged to read information provided on a calibration piece and a processor arranged to calibrate the instrument using information read from the calibration piece by the reader together with a measurement of a property of the calibration piece made by the instrument.

The reader enables the instrument to read information from a calibration piece, which would typically relate to a property of the calibration piece. So the invention enables calibration data to be automatically entered into a measuring instrument that has hitherto been entered manually. This saves time, and reduces the risk of error.

The processor may calibrate the instrument by adjusting the instrument so that the measured property of the calibration piece is substantially equal to a value of the property determined by the reader by reading information from the calibration piece.

The reader could be any suitable non-contact reader, for example a wireless reader such as a radio frequency identification reader, an optical reader or a magnetic reader.

The measuring instrument may be for measuring coating thickness. The invention is, however, applicable to a whole range of measuring instruments such as surface and profile roughness meters, gloss and reflectance meters and ultrasonic thickness gauges.

The reader may also be arranged to read information provided on an article to be measured and the processor arranged to associate the information with a measurement made of the article. This information could be a description of the article and/or a location on the article.

The reader may also be arranged to read information provided on a detachable probe used with the measuring instrument and the processor arranged to process readings made using the probe with the information read from the probe.

According to another aspect of the invention there is provided measuring apparatus comprising a measuring instrument according to the previous aspect, with or without any of its optional features, and one or more calibration pieces, each calibration piece comprising information relating to a property of that calibration piece in a form which may be read by the reader. This form could be a radio frequency identification tag, bar or other optical code or magnetic strip, or any other suitable machine readable form.

The one or more calibration pieces may be calibration foils and comprise information relating to their thickness. Where the instrument is a gloss meter the one or more calibration pieces may comprise information relating to their glossiness.

According to another aspect of the invention, which is defined in claim 11, there is provided a method of calibrating a measuring instrument comprising the steps of:
providing a measuring instrument comprising a reader arranged to read information provided on another article;
providing a calibration piece comprising information relating to a property of the calibration piece in a form readable by the reader of the measuring instrument;
measuring the said property of the calibration piece using the measuring instrument; and
reading the information comprised in the calibration piece using the reader of the instrument.

The method may comprise the further step of adjusting the instrument so that the value of the property measured by the instrument is substantially equal to the value of the property determined from the information read from the calibration piece.

According to another aspect of the invention, which is defined in claim 13, there is provided a method of measuring a property of an article comprising the steps of:
providing a measuring instrument comprising a reader arranged to read information provided on another article;
providing information identifying the article to be measured on the article in a form which is readable by the reader of the measuring instrument;
measuring a property of the article using the instrument to obtain a value;
reading the information identifying the article to be measured using the reader of the measuring instrument; and
associating the value with the information read from the article.

According to another aspect of the invention, which is defined in claim 14, there is provided a method of measuring a property of an article at multiple points on the article comprising the steps of:
providing a measuring instrument comprising a reader arranged to read information provided on another article;
providing information on the article to be measured at multiple positions on the article in a form which is readable by the reader of the measuring instrument;
measuring a property of the article using the measuring instrument at or near a position where information is provided to obtain a value;
reading the information provided at the position using the reader of the measuring instrument; and
associating the value with the information.
The latter three steps may be repeated at different positions on the article.

According to another aspect, which does not form part of the present invention, there is provided a coating thickness measuring instrument comprising at least one detachable probe for measuring coating thickness, a reader arranged to read information provided on the or each detachable probe when the probe is fitted to the instrument and a processor, wherein the processor is arranged to process measurements made using a particular probe using information read from the probe.

The reader enables the instrument to read information from a probe used with the instrument. The information would typically relate to a property of the probe. So, the invention enables data required to enable the instrument to function correctly, when a particular probe is used, to be automatically entered into the instrument.

The reader could be any suitable non-contact reader, for example a wireless reader such as a radio frequency identification reader, an optical reader or a magnetic reader.

According to another aspect, which does not form part of the present invention, there is provided a method of measuring a coating thickness comprising the steps of:
a. providing a coating thickness measuring instrument comprising at least one detachable probe, a reader arranged to read information provided on the or each detachable probe when the probe is fitted to the instrument and a processor;
b. fitting a probe to the instrument;
c. reading information provided on the probe using the reader;
d. making a measurement of a coating thickness using the instrument; and
e. processing the measurement using the information read from the probe in order to yield a value for the measurement.

Features of any one aspect of the invention may be combined with those of any other aspect of the invention as desired or as appropriate.

### Brief description of the drawings

In order that the invention may be more clearly understood embodiments thereof will now be described, by way of example, with reference to the accompanying drawings of which:
- Figure 1:: is a perspective view of a coating thickness measuring instrument in use with a calibration foil;
- Figure 2:: is a schematic view of the instrument of figure 1;
- Figure 3:: is a perspective view of another coating thickness measuring instrument in use making a coating thickness measurement; and
- Figure 4:: is a schematic view of the instrument figure 3.

### Detailed description of the invention

In the drawings, like reference numerals are used to identify like components throughout.

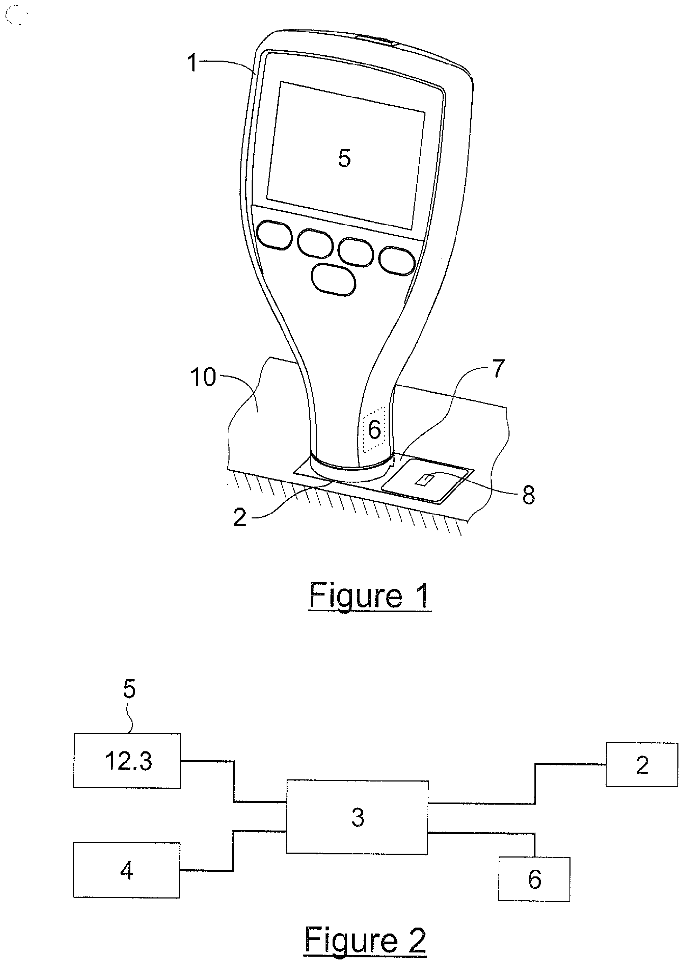

Referring to figures 1 and 2, a first embodiment of a coating thickness measuring instrument comprises a housing 1. The housing houses an inductive measurement probe 2, a programmable processor 3, a user input device 4 comprising a number of buttons, an electronic display screen 5 and a radio frequency identification (RFID) reader 6. The housing may also house a power supply and interface for connection to a personal computer and other components and features common to known instruments.

The probe 2, input device 4 and display screen 5 are operatively connected to the processor and operate as for a conventional instrument. The probe 2 produces a signal which is dependent on its spacing from a suitable substrate. The input device 4 enables a user to input information into the instrument and to control its operation through menus which are displayed on the screen 5 along with the results of measurements taken by the probe 2. Operation of the instrument is driven by the processor 3 which is programmed with appropriate software.

The instrument differs from conventional instruments through the provision of an RFID reader 6 which is operatively connected to the processor 3, and through the software running on the processor 3 which enables the processor to use the RFID reader 6 to read information from RFID tags and to utilise the information which is read.

One application of the RFID reader is to facilitate calibration of the instrument. The instrument is provided with calibration foils 7, one of which is shown in figure 1. Each foil comprises an RFID tag 8 which stores information relating to the thickness of the foil and/or a unique identifier of the foil such as a serial number.

To calibrate the instrument, a user enters a calibration mode using the buttons comprised in the input device and is then prompted by information on the display screen 5 to take one or more calibration readings, using one or more calibrations foils, by placing the calibration foil onto the bare surface of a substrate 10 in relation to which it is desired to calibrate the instrument and then placing the probe in contact with the calibration foil. At this stage, as the instrument is brought into proximity with the calibration foil being used, the RFID reader 6 is arranged to interrogate the RFID tag 8 on the foil and read the stored thickness of the foil 7 and/or the unique identifier of the foil. This information is provided to the processor 3 and used to calibrate the instrument. The information could be used directly, or to identify other information, for example in a look up table, which is then used to calibrate the instrument. The process is repeated, as necessary, for other foils, each time the RFID reader 6 obtaining the thickness of the foil from the RFID tag 8 provided on this foil. This overcomes the need for the user to manually input the thickness of the foil, saving time and ensuring that the processor is accurately provided with the foil thickness.

The RFID reader 6 can be used to read other information from RFID tags. In one application where repeated coating thickness readings must be taken from a number of articles, or from multiple positions on one or more articles, an RFID tag may be attached to each article, or tags may be attached to multiple positions on a single article at which readings are to be taken, the tags storing information which identifies the article and/or position of the tag on the article. When a measurement is taken, the RFID reader 6 on the instrument interrogates the nearby tag on the article and the coating thickness measurement taken is associated with the tag by the processor. Thus a measurement can be automatically identified with an article and/or a position on an article, avoiding the need for an operator to enter this information into the instrument or make a separate record of readings against article and/or position on the article.

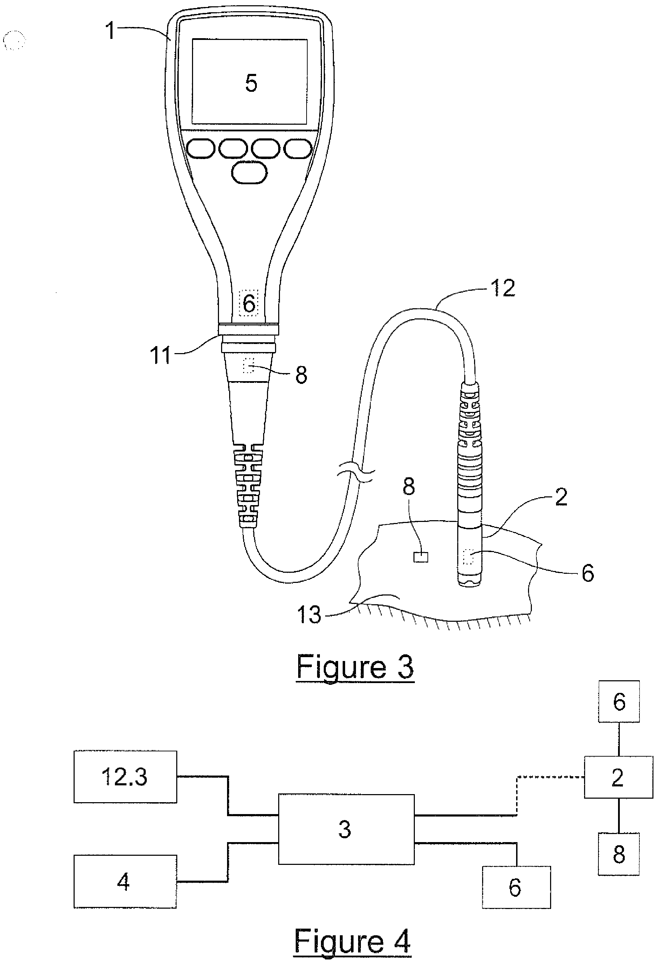

Referring to figures 3 and 4 a second embodiment of a coating thickness measurement instrument is similar to that shown in figures 1 and 2, except that, instead of the housing 1 containing a probe 2, it is provided with a fitting 11 with electrical connections to which a probe 2 may be releasably mounted. This enables the instrument to be used with a variety of different probes, either mounted directly to the instrument, or via an electrical cable 12 as shown.

In this case, the probe 2 is provided with an RFID reader 6 for interrogating an RFID tag 8 and information read from the tag is transmitted to the instrument via the cable 12, or a direct connection where there is no cable.

The RFID reader may, as with the example shown in figure 1, be used to read information from an RFID tag on a calibration foil or it may, as shown in figure 3, be used to read an RFID tag 8 on a coated surface 13, the tag storing information relating to its position on the surface.

The instrument shown in figures 3 and 4 also includes an RFID reader disposed in its housing 1. This reader could be used in place of or in addition to the reader provided on the probe 2 to read RFID tags associated with calibration foils or articles. The reader on the instrument is also arranged to read information from an RFID tag 8 mounted on the probe 2, or electrical connector used to mount the probe to the instrument. The RFID tag associated with the probe stores information regarding the performance of the probe, which is used by the processor 3 to optimise readings taken by the probe, for example by taking account of the individual probe's response compared to its theoretical design response.

The present invention greatly facilitates the calibration and use of thickness measurement instruments as well as improving accuracy by reducing the opportunity for a user error.

The above embodiments are described by way of example only. Many variations are possible without departing from the invention as defined by the following claims.

## Claims

1. A measuring instrument comprising a reader (6) arranged to read information provided on a calibration piece (7) and a processor (3) arranged to calibrate the instrument using information read from the calibration piece (7) by the reader (6) together with a measurement of a property of the calibration piece (7) made by the instrument.

2. A measuring instrument as claimed in claim 1 wherein the processor (3) is arranged to calibrate the instrument by adjusting the instrument so that the measured property of the calibration piece (7) is substantially equal to a value of the property determined by the reader (6) by reading information from the calibration piece (7).

3. A measuring instrument as claimed in either claim 1 or 2 wherein the reader (6) is a wireless reader.

4. A measuring instrument as claimed in claim 3 wherein the reader (6) is a radio frequency identification reader, an optical reader or a magnetic reader.

5. A measuring instrument as claimed in any preceding claim wherein the instrument is for measuring coating thickness.

6. A measuring instrument as claimed in any preceding claim wherein the reader (6) is also arranged to read information provided on an article to be measured and the processor (3) is also arranged to associate the information with a measurement made of the article.

7. A measuring instrument as claimed in any preceding claim wherein the reader (6) is also arranged to read information provided on a detachable probe (2) used with the measuring instrument and the processor (3) is also arranged to process readings made using the probe (2) with the information read from the probe (2).

8. Measuring apparatus comprising a measuring instrument as claimed in any preceding claim and one or more calibration pieces (7), each calibration piece (7) comprising information relating to a property of that calibration piece (7) in a form which may be read by the reader (6).

9. Measuring apparatus as claimed in claim 8 wherein the one or more calibration pieces (7) are calibration foils and comprise information relating to their thickness.

10. Measuring apparatus as claimed in claim 8 wherein the one or more calibrations pieces comprise information relating to their glossiness.

11. A method of calibrating a measuring instrument comprising the steps of:
a. providing a measuring instrument as claimed in any of claim 1 to 7;
b. providing a calibration piece (7) comprising information relating to a property of the calibration piece (7) in a form readable by the reader (6) of the measuring instrument;
c. measuring the said property of the calibration piece (7) using the measuring instrument and recording a measured value;
d. reading the information comprised in the calibration piece (7) using the reader (6) of the instrument; and
e. calibrating the measuring instrument using the information together with the measured value.

12. A method of calibrating a measuring instrument as claimed in claim 11 comprising the further step of adjusting the instrument so that the recorded value of the property measured by the instrument is substantially equal to the value of the property determined from the information read from the calibration piece (7).

13. A method of measuring a property of an article comprising the steps of:
a. providing a measuring instrument as claimed in any of claims 1 to 7;
b. providing information identifying the article to be measured on the article in a form which is readable by the reader (6) of the measuring instrument;
c. measuring a property of the article using the instrument to obtain a value;
d. reading the information identifying the article to be measured using the reader (6) of the measuring instrument; and
e. associating the value with the information read from the article.

14. A method of measuring a property of an article at multiple points on the article comprising the steps of:
a. providing a measuring instrument as claimed in any of claims 1 to 7;
b. providing information on the article to be measured at multiple positions on the article in a form which is readable by the reader (6) of the measuring instrument;
c. measuring a property of the article using the measuring instrument at or near a position where information is provided to obtain a value;
d. reading the information provided at the position using the reader (6) of the measuring instrument; and
e. associating the value with the information.

15. A method of measuring a property of an article at multiple points on the article as claimed in claim 14 comprising the step of repeating steps c. to e. at different positions.

## Patentansprüche

1. Meßinstrument mit einem Leser (6), wobei der Leser eingerichtet ist zum Lesen der auf einem Kalibrierungsstück (7) bereitgestellten Information und einem Prozessor (3), wobei der Prozessor eingerichtet ist zum Kalibrieren des Instruments unter Verwendung der von dem Kalibrierungsstück (7) vom Leser (6) gelesenen Information zusammen mit einer von dem Instrument durchgeführten Messung einer Eigenschaft des Kalibrierungsstücks (7).

2. Meßinstrument nach Anspruch 1, wobei der Prozessor (3) eingerichtet ist, das Instrument zu kalibrieren, indem das Instrument so eingestellt wird, dass die gemessene Eigenschaft des Kalibrierungsstücks (7) im Wesentlichen gleich einem Wert der Eigenschaft ist, der durch den Leser (6) durch Lesen von Information von dem Kalibrierungsstück (7) bestimmt wird.

3. Meßinstrument nach Anspruch 1 oder 2, wobei der Leser (6) ein drahtloser Leser ist.

4. Meßinstrument nach Anspruch 3, bei dem der Leser (6) ein Funkfrequenz-Identifikationsleser, ein optischer Leser oder ein magnetischer Leser ist.

5. Meßinstrument nach einem der vorhergehenden Ansprüche, bei dem das Instrument zum Messen der Beschichtungsdicke dient.

6. Meßinstrument nach einem der vorhergehenden Ansprüche, bei dem das Lesegerät (6) auch dazu eingerichtet ist, auf einem zu messenden Gegenstand bereitgestellte Information zu lesen, und der Prozessor (3) auch dazu eingerichtet ist, die Information einer durchgeführten Messung des Gegenstandes zuzuordnen .

7. Meßinstrument nach einem der vorhergehenden Ansprüche, bei dem das Lesegerät (6) auch zum Lesen von Information ausgelegt ist, die an einer abnehmbaren Sonde (2) vorgesehen ist, die mit dem Meßinstrument verwendet wird, und der Prozessor (3) auch dazu eingerichtet ist mit der von der Sonde (2) gelesene Information, unter Verwendung der Sonde (2), zu verarbeiten.

8. Messvorrichtung mit einem Messinstrument nach einem der vorhergehenden Ansprüche und einem oder mehreren Kalibrierstücken (7), wobei jedes Kalibrierstück (7) Information in Bezug auf eine Eigenschaft des Kalibrierstücks (7) in einer Form enthält, die durch den Leser (6) gelesen werden kann.

9. Messvorrichtung nach Anspruch 8, bei der das eine oder die mehreren Kalibrierstücke (7) Kalibrierfolien sind und Information bezüglich ihrer Dicke umfassen.

10. Messvorrichtung nach Anspruch 8, wobei das eine oder die mehreren Kalibrierungsstücke Information bezüglich ihres Glanzes umfassen.

11. Verfahren zum Kalibrieren eines Messinstruments, umfassend die Schritte:
a. Bereitstellen eines Messinstruments nach einem der Ansprüche 1 bis 7;
b. Bereitstellen eines Kalibrierungsstücks (7), das Information in Bezug auf eine Eigenschaft des Kalibrierungsstücks (7) in einer durch den Leser (6) des Messinstruments lesbaren Form umfasst;
c. Messen der Eigenschaft des Kalibrierungsstücks (7) unter Verwendung des Messinstruments und Aufzeichnen eines gemessenen Werts;
d. Lesen der in dem Kalibrierungsstück (7) enthaltenen Information unter Verwendung des Lesers (6) des Instruments; und
e. Kalibrieren des Messgeräts unter Verwendung der Information zusammen mit dem gemessenen Wert.

12. Verfahren zum Kalibrieren eines Messinstruments nach Anspruch 11, umfassend den weiteren Schritt des Einstellens des Instruments, so dass der durch das Instrument gemessene aufgezeichnete Wert der Eigenschaft im Wesentlichen gleich dem Wert der Eigenschaft ist, der aus der von dem Kalibrierstück (7) gelesenen Information bestimmt wird.

13. Verfahren zum Messen einer Eigenschaft eines Gegenstands, umfassend die Schritte:
a. Bereitstellen eines Messinstruments nach einem der Ansprüche 1 bis 7;
b. Bereitstellen von Information, die den zu messenden Gegenstand auf dem Gegenstand in einer Form identifiziert, die von dem Leser (6) des Messinstruments gelesen werden kann;
c. Messen einer Eigenschaft des Artikels unter Verwendung des Instruments, um einen Wert zu erhalten;
d. Lesen der Information, die den zu messenden Gegenstand identifiziert, unter Verwendung des Lesers (6) des Messinstruments; und
e. Zuordnen des Werts zu der Information, die aus dem Artikel gelesen wird.

14. Verfahren zum Messen einer Eigenschaft eines Gegenstands an mehreren Punkten auf dem Gegenstand, umfassend die Schritte:
a. Bereitstellen eines Messinstruments nach einem der Ansprüche 1 bis 7;
b. Bereitstellen von Information über den zu messenden Gegenstand an mehreren Positionen auf dem Gegenstand in einer Form, die von dem Lesegerät (6) des Messinstruments gelesen werden kann;
c. Messen einer Eigenschaft des Artikels unter Verwendung des Messinstruments an oder nahe einer Position, an der Information bereitgestellt wird, um einen Wert zu erhalten;
d. Lesen der an der Position bereitgestellten Information unter Verwendung des Lesers (6) des Messinstruments; und
e. Zuordnen des Wertes zu der Information.

15. Verfahren zum Messen einer Eigenschaft eines Artikels an mehreren Punkten auf dem Artikel nach Anspruch 14, umfassend den Schritt des Wiederholens der Schritte c. bis e. an verschiedenen Positionen.

## Revendications

1. Instrument de mesure, comprenant un lecteur (6), agencé pour lire de l'information prévue sur une pièce (7) d'étalonnage, et un processeur (3), agencé pour étalonner l'instrument en utilisant de l'information lue de la pièce (7) d'étalonnage par le lecteur (6) ensemble avec une mesure d'une propriété de la pièce (7) d'étalonnage faite par l'instrument.

2. Instrument de mesure suivant la revendication 1, dans lequel le processeur (3) est agencé pour étalonner l'instrument en réglant l'instrument de manière à ce que la propriété mesurée de la pièce (7) d'étalonnage soit sensiblement égale à une valeur de la propriété déterminée par le lecteur (6) en lisant de l'information de la pièce (7) d'étalonnage.

3. Instrument de mesure suivant la revendication 1 ou 2, dans lequel le lecteur (6) est un lecteur sans fil.

4. Instrument de mesure suivant la revendication 3, dans lequel le lecteur (6) est un lecteur d'identification en fréquence radio, un lecteur optique ou un lecteur magnétique.

5. Instrument de mesure suivant l'une quelconque des revendications précédentes, dans lequel l'instrument est destiné à mesurer une épaisseur de revêtement.

6. Instrument de mesure suivant l'une quelconque des revendications précédentes, dans lequel le lecteur (6) est agencé aussi pour lire de l'information prévue sur un article à mesurer et le processeur (3) est agencé aussi pour associer l'information à une mesure faite de l'article.

7. Instrument de mesure suivant l'une quelconque des revendications précédentes, dans lequel le lecteur (6) est agencé aussi pour lire de l'information prévue sur une sonde (2) détachable utilisée avec l'instrument de mesure et le processeur (3) est agencé aussi pour traiter des relevés faits en utilisant la sonde (2) avec l'information lue de la sonde (2).

8. Dispositif de mesure comprenant un instrument de mesure tel que revendiqué à l'une quelconque des revendications précédentes et une ou plusieurs pièces (7) d'étalonnage, chaque pièce (7) d'étalonnage comprenant de l'information se rapport à une propriété de cette pièce d'étalonnage sous une forme, qui peut être lue par le lecteur (6).

9. Dispositif de mesure suivant la revendication 8, dans lequel la une ou les plusieurs pièces (7) d'étalonnage sont des feuilles métalliques d'étalonnage et comprennent de l'information se rapportant à leur épaisseur.

10. Dispositif de mesure suivant la revendication 8, dans lequel la une ou les plusieurs pièces d'étalonnage comprennent de l'information se rapportant à leur brillance.

11. Procédé d'étalonnage d'un instrument de mesure, comprenant les stades de :
a. on se procure un instrument de mesure tel que revendiqué à l'une quelconque des revendications 1 à 7;
b. on se procure une pièce (7) d'étalonnage comprenant de l'information se rapportant à une propriété de la pièce (7) d'étalonnage sous une forme pouvant être lue par le lecteur (6) de l'instrument de mesure;
c on mesure ladite propriété de la pièce (7) d'étalonnage en utilisant l'instrument de mesure et on enregistre une valeur mesurée;
d. on lit l'information comprise dans la pièce (7) d'étalonnage en utilisant le lecteur (6) de l'instrument et
e. on étalonne l'instrument de mesure en utilisant l'information ensemble avec la valeur mesurée.

12. Procédé d'étalonnage d'un instrument de mesure suivant la revendication 11, comprenant le stade supplémentaire de réglage de l'instrument, de manière à ce que la valeur enregistrée de la propriété mesurée par l'instrument soit sensiblement égale à la valeur de la propriété déterminée à partir de l'information lue de la pièce (7) d'étalonnage.

13. Procédé de mesure d'une propriété d'un article, comprenant les stades de :
a. on se procure un instrument de mesure tel que revendiqué à l'une quelconque des revendications 1 à 7;
b. on se procure de l'information identifiant l'article à mesurer sur l'article sous une forme, qui peut être lue par le lecteur (6) de l'instrument de mesure;
c. on mesure une propriété de l'article en utilisant l'instrument pour obtenir une valeur;
d. on lit l'information identifiant l'article à mesurer en utilisant le lecteur (6) de l'instrument de mesure et
e. on associe la valeur à l'information lue de l'article.

14. Procédé de mesure d'une propriété d'un article en des points multiples de l'article, comprenant les stades de :
a. on se procure un instrument de mesure tel que revendiqué à l'une quelconque des revendications 1 à 7;
b. on se procure de l'information sur l'article à mesurer en des positions multiples de l'article sous une forme, qui peut être lue par le lecteur (6) de l'instrument de mesure;
c. on mesure une propriété de l'article en utilisant l'instrument de mesure à ou près d'une position ou de l'information est procurée pour obtenir une valeur;
d. on lit l'information procurée à la position en utilisant le lecteur (6) de l'instrument de mesure et
e. on associe la valeur à l'information.

15. Procédé de mesure d'une propriété d'un article en des points multiples de l'article suivant la revendication 14, comprenant le stade de répétition des stades c. à e. en des positions différentes.
